# EUROPEAN PATENT APPLICATION

(11) **EP 0 601 428 A1**
(43) Date of publication of application: **15.06.1994**
(21) Application number: 93119181.1
(22) Date of filing: 29.11.1993
(51) Int. Cl.: G06F 9/46

(54) **System and method for controlling the execution of remotely originating tasks on a local workstation**

(30) Priority: 11.12.1992 US 989250
(71) Applicant: International Business Machines Corporation, Armonk, N.Y. 10504 (US)
(72) Inventor: Brase, Bruce Alan, Austin, Texas 78729 (US); Burnett, Thomas Lawrence III, Austin, Texas 78759 (US); Letsinger, Richard Lewis, Austin, Texas 78717 (US); Spencer, Alexander Koos, Austin, Texas 78750 (US)
(74) Representative: Burt, Roger James, Dr.

(57) **Abstract**

Systems and methods by which a workstation local user connected to a distributed computing environment network can selectively control the computational resources of a multi-tasking workstation. Network assigned tasks defined by process group protocol are linked to a batch process system daemon task. The batch process system daemon communicates through shared memory, using state variables, to a user monitor task executing on the local workstation. User initiated control operations are entered into the user monitor task and linked back by state variable through workstation shared memory to the batch process system daemon. In another form, the network assigned tasks are cooperatively configured to directly read and write the state variables in shared memory.

## Description

The present invention relates generally to the management of resources in a computer network. More specifically, the invention is directed to systems and methods by which a workstation user can selectively manage the data processing resources of his or her workstation when such workstation is processing a task transmitted from a remote workstation in a distributed computing environment.

The evolution of data processing technology has provided workstations with data processing performance well above the routine needs of the local user and created high speed networks for interconnecting multiples of such workstations into distributed computing environments. As a consequence of such localized computational power, data distribution resources, and useable data processing time outside customary work hours, distributed computing in clusters or networks with token ring or ethernet protocols, has proven to be an efficient and expedient alternative to having programs executing on a single mainframe or super computer. Distributed computing of this form is of course most relevant to application programs which may be partitioned into individually executable tasks. Examples include monte carlo simulations, testcase generation programs, or parameter variable logic synthesis tasks.

During the design of complex computer systems it is not unusual to perform hundreds of millions of individual program defined simulations which execute in hours or days. Since each run is relatively independent, commonly varying only in the parameters selected, this form of data processing also lends itself to a clustered or distributed computing environment.

Networks have been defined in which a server workstation manages a queue of task applications subject to distribution to multiple workstations connected as clients in the network. The client workstations in the network individually run batch processing programs which communicate with a queue manager program in the server workstation. The server workstation distributes programs to the clients and receives the results back from the clients. During non-working hours, the server manages the task allocation with no competition for the individual workstation computational resources. On the other hand, during working hours the network server must share individual workstation data processing resources with the local workstation user.

The sharing of workstation resources between the human user and the network server is accomplished through a multi-tasking operating system such as AIX or UNIX, the former being a trademarked commercially available program from IBM Corporation and the latter from the UNIX Systems Labs, Inc. Though multi-tasking provides for a sharing of the workstation processor's data processing resources, the range of allocation is limited and often unacceptable to the local workstation user. This is particularly evident when the local users desire to undertake a locally run and computationally intensive program. For example, if the sharing of computational resources is set at 50% by the operating system, a local user's program that normally take two hours to execute would run four hours to completion. As a consequence, individual workstation users dislike being connected to distributed computing environment networks.

Another undesirable aspect of the present networking practice occurs if the local user chooses to preempt the use of the workstation while a network assigned task is in progress. For example, the network assigned task may have already run 11 of the 12 hours to completion when the workstation user terminates the execution to acquire temporary but exclusive use of the workstation.

Accordingly, there exists a need for systems and methods which allow a multi-tasking workstation user to selectively acquire exclusive use of the workstation computational resources by linking into a executing network assigned task and suspending such network assigned task.

The above drawbacks of the prior art are overcome by the invention as claimed.

The present invention defines systems and methods which allow the user of a multi-tasking workstation receiving network assigned tasks to selectively link into and temporarily or permanently suspend a task assigned from a network server.

In one form, a plurality of multi-tasking workstations are connected to receive tasks over a network, and include means for executing the network transmitted first data processing tasks on a first workstation, and means for selectively interrupting the first data processing task through user selection in a second data processing task executing on the first workstation. In another form, the invention relates to a method for managing the use of workstations connected in a network, and include the steps of distributing over the network data processing tasks to a plurality of multi-tasking workstations, executing a first network distributed data processing task on a first workstation, and selectively interrupting of the first data processing task through user selection in a second data processing task executing on the first workstation.

A preferred embodiment of the invention involves a system or method by which a server workstation connected to a network manages the assignment of tasks to a multiplicity of client workstations connected on the network. Individual tasks are managed at the client workstations by multi-tasking batch processing resources. Each such user local workstation also includes a user monitor resource, which resource is responsive to user inputs specifying temporary or permanent suspension of the network assigned tasks.

Communication between the batch process resource and the user monitor resource in a workstation is accomplished through the reading and writing of state variables in shared memory as defined by the protocols in the AIX and UNIX operating systems. Thereby, local user control, as specified through user monitor resources, is imposed upon the batch process managing the execution of network assigned tasks.

By providing systems and methods which allow a multi-tasking workstation user to selectively acquire exclusive use of the workstation computational resources, this invention provides an organization with greater effective access to their network computing resources.

These and other features of the invention will be more clearly understood and appreciated upon considering the detailed embodiment set forth hereinafter.

Figure 1 is a schematic diagram of a network having a server workstation and multiple multi-tasking client workstations.

Figure 2 is a schematic diagram depicting the functional distribution of tasks.

Figure 3 is a schematic diagram functionally depicting the interaction between the user monitor and batch process resources in a workstation.

Figure 4 is a schematic flow diagram for an uncooperative task batch process.

Figure 5 is a schematic flow diagram for a cooperative task batch process.

Figure 6 is a schematic illustrating a workstation user screen.

Figure 7 is a schematic flow diagram of the operations associated with the user screen in Figure 6.

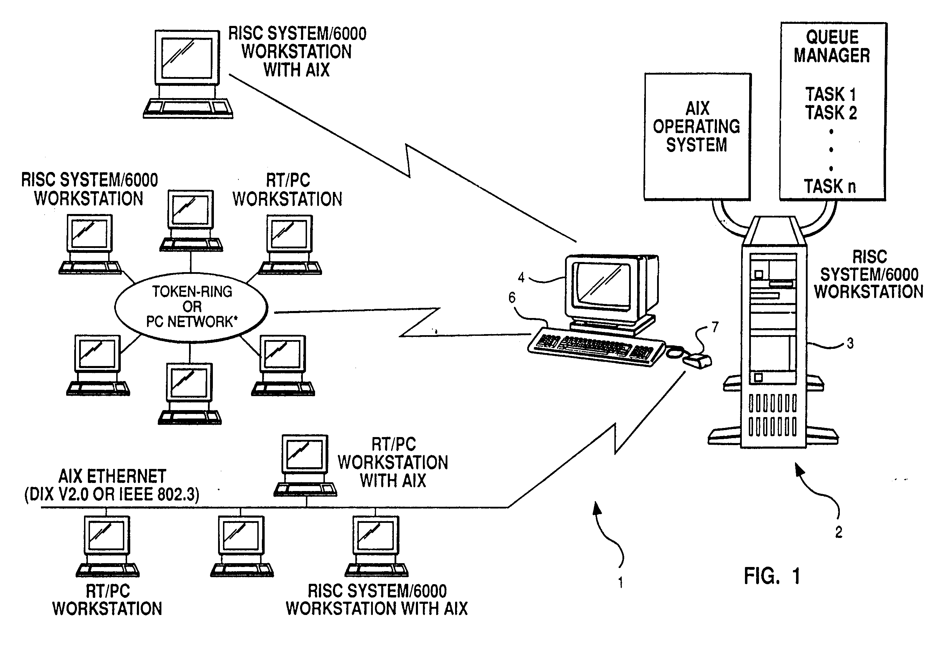

Figure 1 schematically illustrates a network, generally at 1, suited to the particulars of the present invention. As shown, the network includes a multiplicity of workstations configured with the elements in server workstation 2, namely, processor system 3, a video display 4, a keyboard 6, and a mouse-type cursor control 7. Each workstation includes a multi-tasking operating system. Server workstation 2 in Figure 1 also includes queue manager software. This software manages the multiplicity of tasks 1-n to be transmitted over the network to the client workstations on the network. As illustrated in Figure 1, the network can range from a single workstation to commercially configured token-ring or ethernet networks of workstations. A preferred implementation involves the use of RISC System/6000 workstations or RT/PC workstations running under an AIX operating system. Both the workstations and operating system are products commercially distributed by IBM Corporation.

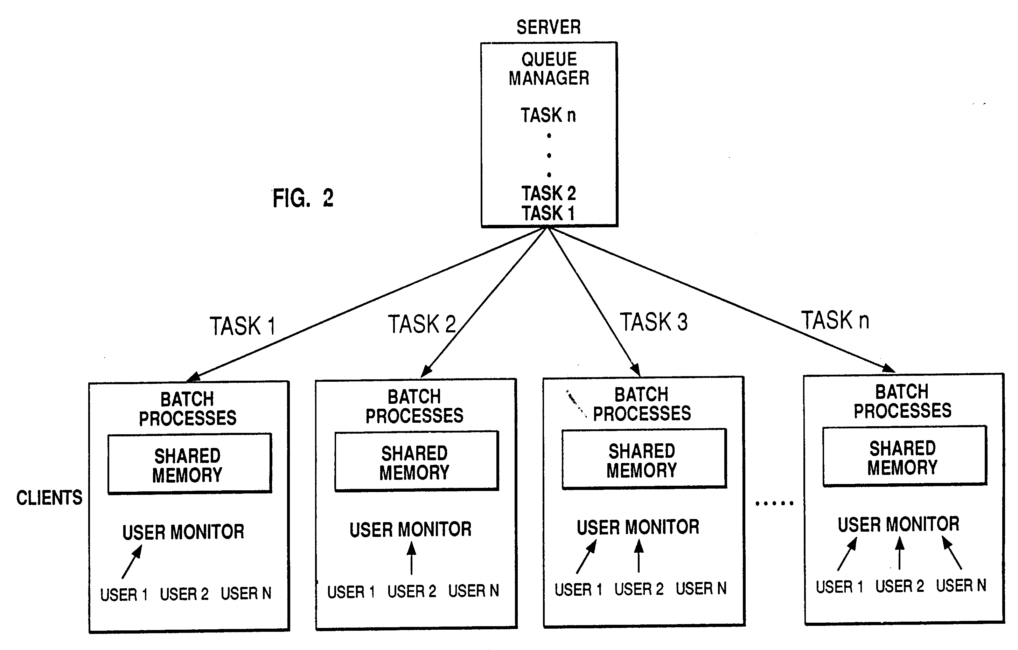

Figure 2 schematically depicts the relationship of the queue manager function, as performed at the server workstation, and the batch process and user monitor functions as performed at the network client workstations. The queue manager program on the server workstation assigns tasks to available batch processes running on client workstations. Though this functional arrangement provides an efficient distributed processing environment, through the use of computational resources in idle client workstations, it creates contention between the server initiated tasks and local user initiated tasks as executed on the client workstations. To solve this dilemma, the present invention introduces, as shown in Figure 2, a user monitor resource, in the form of another task running on the multi-tasking workstation, which interfaces to the batch processes through shared memory. As illustrated, any number of users who have logged onto a client workstation may through the user monitor task link into and temporarily or permanently interrupt the processing of a task received from the network server.

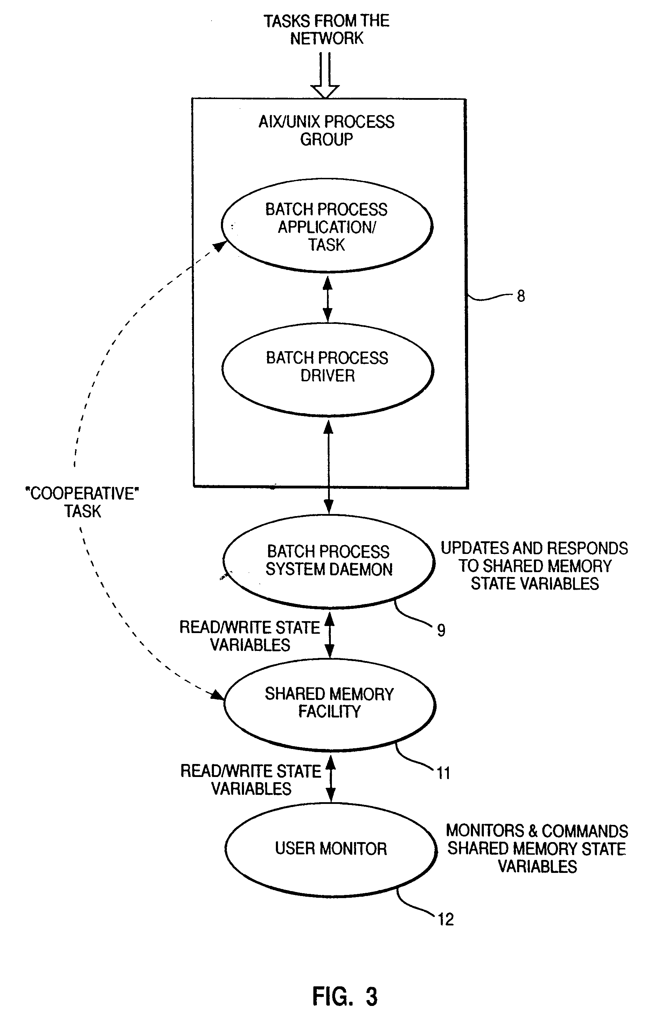

Figure 3 schematically illustrates how the user monitor task, accessible to the users, is linked through shared memory to the batch processes managing tasks from the network. The tasks received from the network are arranged and managed according to an AIX or UNIX process group protocol 8. In conformance with that protocol, a task is divided into a batch process application or task and a batch process driver. In addition to conventional process group 8, the present invention now introduces a batch process system daemon 9. Daemon program 9 is a task which executes in the background on a client workstation, to the extent that it is not visible to the workstation user. Batch process system daemon 9 is provided with root authority, as defined in the operating system protocol, and therefore has the capability to suspend, resume or cancel all processes in the batch process group.

Shared memory facility 11 in Figure 3 represents a shared address range in the memory of the client workstation, which memory is used to communicate information between batch process system daemon program 9 and user monitor program 12. Information is conveyed through the reading and writing of commonly defined state variables in the shared memory, or through a semaphore mechanism.

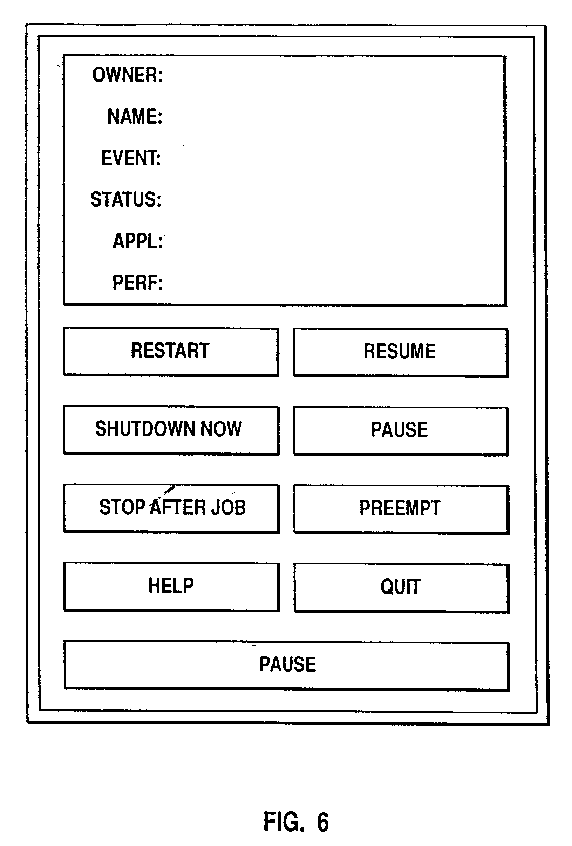

User monitor program 12 generates a user friendly graphic interface for the entry of control information. A preferred implementation is depicted in Figure 6. User monitor 12 also provides an interface responsive to a mouse, such as 7 in Figure 1, and a visual feedback or status of the network assigned task. In this way, the network transmitted tasks which conform to the AIX/UNIX process group protocol 8 become responsive to a client workstation operating system root authority as exists in batch process system daemon 9. Communication between the daemon task 9 and the user monitor task 12 is afforded by state variables transmitted through shared memory. Note that this convention circumvents the conventional practice of isolating tasks concurrently executing on a multi-tasking workstation.

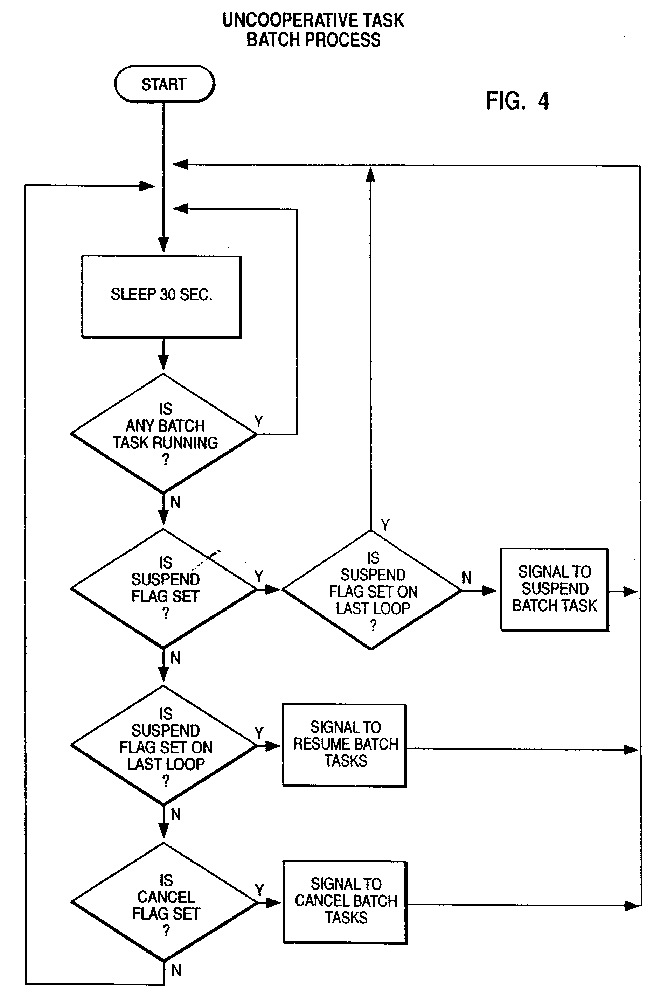

The functional relationships defined by the solid line depiction in Figure 3 represents an uncooperative management of tasks within the client workstation. This definition is ascribed to process group tasks which are relatively generic, and as a consequence lack any direct "hooks" to shared memory. All communication between the network assigned tasks in process group 8 and the shared memory facility 11 is accomplished through batch process system daemon 9. This uncooperative configuration is in contrast to a task which has been refined at writing to interface directly into user monitor program 12. A flow diagram depicting the execution of a batch process involving an uncooperative task is depicted in Figure 4. Note that the decisions are referenced to batch tasks.

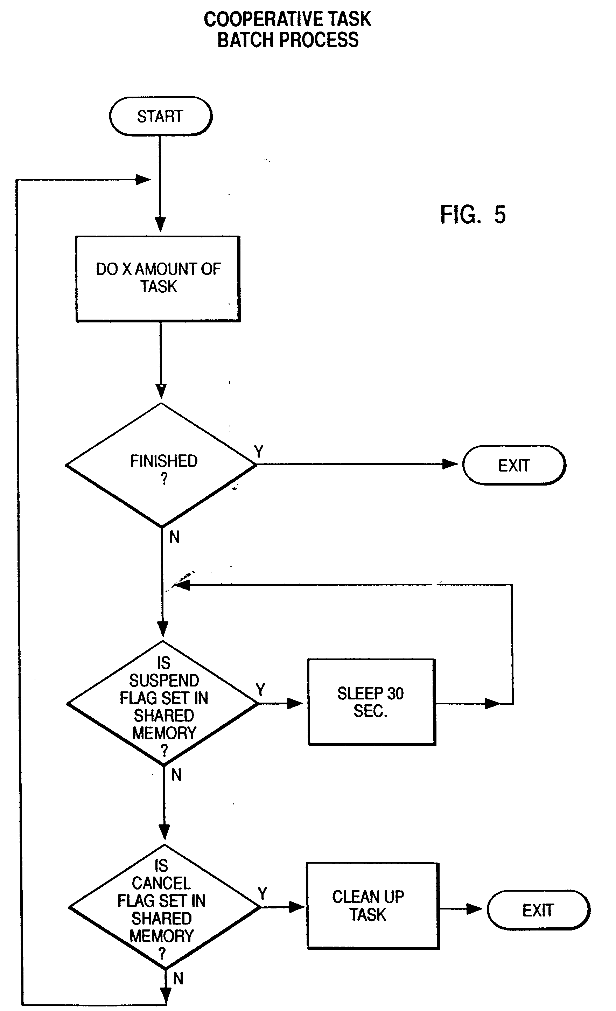

Cooperative network tasks are those which have been prepared in anticipation of communicating with user monitor program 12. In such case, "hooks" have been inserted to check state variables within the defined shared memory, and to directly interrupt the network assigned task responsive to user commands entered into user monitor program 12, a separate task. Figure 5 depicts by flow diagram the batch processing of a cooperative task. Note that the task decisions are referenced to shared memory facility 11.

Figure 6 depicts a preferred embodiment of the user interface generated for user monitor 12 in Figure 3. Selection is by mouse control of a cursor, or through the use of the workstation keyboard. The OWNER and NAME entries correspond to the owner and name of the network assigned task currently running on the workstation. EVENT, STATUS, APPL, and PERF are additional fields which convey information about the task.

User controls are entered through the eight push button like selection regions in Figure 6. RESTART enables the execution of the network assigned task on the workstation, and as such is the opposite of SHUTDOWN NOW and STOP AFTER JOB. SHUTDOWN NOW terminates the network assigned task, returns the task to the queue manager in the network server, and removes the workstation from the task network. STOP AFTER JOB accomplishes the same as SHUTDOWN NOW, but defers the action until the task in progress has been completed. The HELP selection provides information about the user monitor program. RESUME restarts a task which has been subject to a PAUSE, and as such commences from the point of interruption. RESUME represents the opposite of PAUSE. PAUSE interrupts a task undergoing execution in the workstation. As preferably embodied, a task subject to a PAUSE is automatically resumed after one hour. PREEMPT terminates an ongoing task and returns it to the queue manager in the server, but accepts another task from the network. Actuation of the QUIT selection deletes the user monitor screen image without affecting the network assigned task. The block at the bottom of the image in Figure 6 displays the last actuated choice.

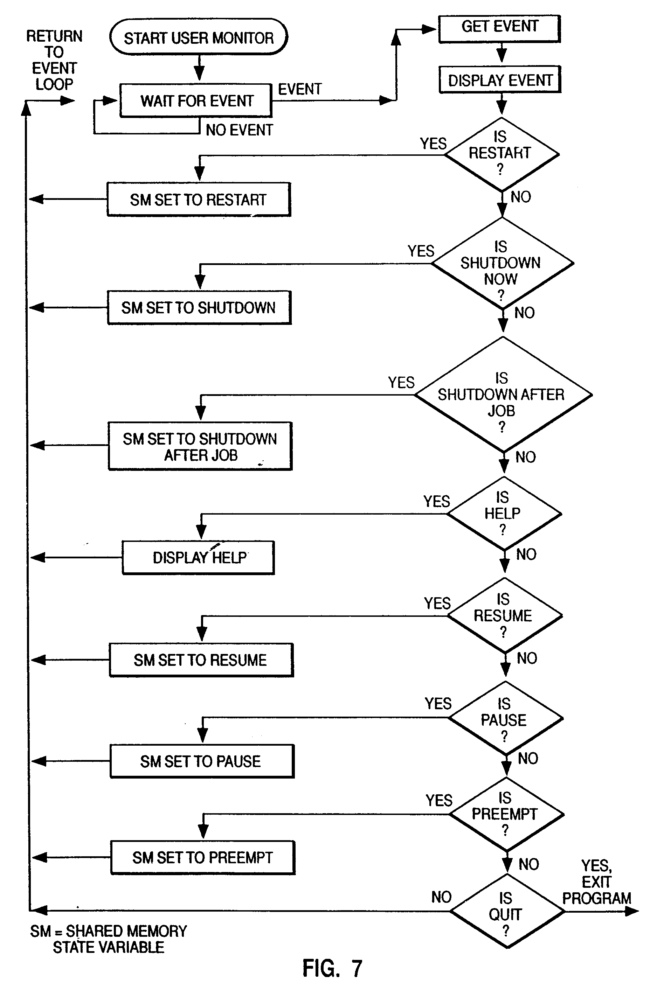

Figure 7 illustrates by flow diagram the relationship of the various choices from the user monitor depicted in Figure 6. Note the links to state variables in shared memory.

The systems and methods of the present invention thereby provide to a local workstation user in a distributed computing environment network with resources to selectively allocate the computational capacity in his or her multi-tasking workstation. The local user is able to preempt network assigned tasks, yet remains connected for efficient network utilization during idle intervals.

## Claims

1. A system for managing the use of a workstation connected to a network of plural multi-tasking workstations, comprising:
means for executing a network distributed first data processing task on a first workstation; and
means for selectively interrupting the first data processing task through user selection in a second data processing task executing on the first workstation.

2. The system recited in claim 1, further comprising:
data processing task queue means in a second workstation of the plurality connected to the network.

3. The system recited in claim 1 or 2, wherein the means for selectively interrupting can temporarily or permanently interrupt the execution of the first data processing task.

4. The system recited in any claim from 1 to 3, wherein the second data processing task executes independent of the first data processing task.

5. A method for managing the use of a workstation connected to a network of plural multitasking workstations, comprising the steps of:
executing a network distributed first data processing task on a first workstation; and
selectively interrupting the first data processing task through user selection in a second data processing task executing on the first workstation.

6. The method recited in claim 5, comprising the further step of:
queuing data processing tasks in a second workstation of the plurality connected to the network.

7. The method recited in claim 5 or 6, wherein the step of selectively interrupting can temporarily or permanently interrupt the execution of the first data processing task.

8. The method recited in any claim from 5 to 7, wherein the second data processing task executes independent of the first data processing task.
